# NEUE EUROPÄISCHE PATENTSCHRIFT

(11) **EP 3 255 360 B2**
(45) Veröffentlichungstag und Bekanntmachung des Hinweises auf die Entscheidung über den Einspruch: **12.03.2025**
(45) Hinweis auf die Patenterteilung: 14.11.2018
(21) Anmeldenummer: 17173428.8
(22) Anmeldetag: 30.05.2017
(51) Int. Cl.: F25B 41/04, F25B 49/00

(54) **KLIMASYSTEM UND VERFAHREN ZUR LECKAGEERKENNUNG IN EINEM KLIMASYSTEM**
AIR CONDITIONING SYSTEM AND METHOD FOR LEAKAGE DETECTION IN AN AIR CONDITIONING SYSTEM
SYSTÈME DE CLIMATISATION ET PROCÉDÉ DE DÉTECTION DE FLUIDE DANS UN SYSTÈME DE CLIMATISATION

(30) Priorität: 08.06.2016 DE 102016110585
(43) Veröffentlichungstag der Anmeldung: 13.12.2017
(60) Teilanmeldung: 18187068.4
(73) Patentinhaber: Truma Gerätetechnik GmbH & Co. KG, 85640 Putzbrunn (DE)
(72) Erfinder: Mathe, Christian, 85386 Eching (DE); Hummel, Georg, 82008 Unterhaching (DE); Härtig, Sebastian, 80636 München (DE); Hiller, Werner, 85661 Forstinning (DE); Gumpp, Daniel, 86415 Mering (DE); Venschott, Mathias, 81825 München (DE)
(74) Vertreter: Prinz & Partner mbB

(56) Entgegenhaltungen:
- EP-A1- 1 970 651
- DE-A1- 102014 213 267
- US-A1- 2005 086 952
- US-A1- 2016 109 170

## Beschreibung

Die Erfindung betrifft ein Klimasystem gemäß dem Oberbegriff des unabhängigen Anspruchs 1.

Weiter betrifft die Erfindung ein Verfahren zur Leckageerkennung in einem Klimasystem gemäß dem Oberbegriff des unabhängigen Anspruchs 1.

Ein Klimasystem gemäß dem Oberbegriff des Anspruchs 1 ist beispielsweise aus der US 2005/0086952 A1 und der EP 1 970 651 A1 bekannt.

Klimasysteme werden im Stand der Technik in den unterschiedlichsten Bereichen verwendet. Dabei werden in den Klimasystemen Kältemittel verwendet, die an den jeweiligen Einsatzzweck angepasste Eigenschaften haben. In herkömmlichen Klimasystemen enthalten die Kältemittel fluorierte Treibhausgase, insbesondere fluorierte Kohlenwasserstoffe.

Im Zuge eines steigenden Umweltbewusstseins und strenger werdender gesetzlicher Vorgaben, zum Beispiel der EU-Verordnung über fluorierte Treibhausgase, rücken sogenannte natürliche Kältemittel immer stärker in den Fokus. Allerdings sind diese Kältemittel in der Regel brennbar, explosiv und/oder toxisch, also im weitesten Sinne für Menschen gesundheitsschädlich.

Personen im Umfeld von Klimasystemen mit solchen Kältemitteln, insbesondere in den damit klimatisierten Räumen, müssen daher vor diesen Kältemitteln geschützt werden. Dies ist insbesondere im Falle einer Kältemittelleckage von höchster Bedeutung.

Klimasysteme mit natürlichen Kältemitteln werden auch zur Klimatisierung von verhältnismäßig kleinen Räumen verwendet. Dies können zum Beispiel Freizeitfahrzeuge sein, also Wohnmobile, Wohnanhänger, Mobilheime, temporäre Behausungen, Wohncontainer, etc. Personen, die sich in solchen kleinen, zu klimatisierenden Räumen aufhalten, müssen schon vor kleinsten Mengen an austretendem Kältemittel geschützt werden. Dafür ist ein wirksames und robustes System zur Leckageerkennung notwendig, das das Austreten von Kältemittel aufgrund von Leckage verhindert oder zumindest die austretende Menge an Kältemittel minimiert. Nur so ist ein sicherer Betrieb eines Klimasystems mit einem natürlichen Kältemittel möglich.

Es ist daher die Aufgabe der Erfindung, ein Klimasystem bereitzustellen, bei dem auf einfache und zuverlässige Art eine Kältemittelleckage erkannt werden kann. Insbesondere sollen auch kleine Kältemittelleckagen erkannt werden.

Die Aufgabe wird durch ein Klimasystem der eingangs genannten Art gelöst, bei dem die Recheneinheit dazu ausgebildet ist, eine Ausgangsdifferenztemperatur als Differenz der Raumtemperatur und der Kältemitteltemperatur am Kältemittelausgang und eine Verdampferdifferenztemperatur als Differenz der Kältemitteltemperatur am Kältemitteleingang und am Kältemittelausgang zu berechnen. Die Berechnung dieser beiden Differenztemperaturen kann in einer einzigen Recheneinheit erfolgen. Alternativ kann jede der Differenzberechnungen in einer separaten Recheneinheit erfolgen. Im Falle einer Leckage verliert der Kältemittelkreislauf eine gewisse Menge an Kältemittel. Es wird jedoch beispielsweise über ein Gebläse weiterhin die gleiche Wärmemenge vom zu klimatisierenden Raum in den Kältemittelverdampfer eingebracht. Gleiches gilt für den Kältemittelkondensator. Dadurch sinkt die Kältemitteltemperatur am Kältemitteleingang des Kältemittelverdampfers, und die Kältemitteltemperatur am Kältemittelausgang des Kältemittelverdampfers steigt. Folglich sinkt im Leckagefall die Ausgangsdifferenztemperatur, und die Verdampferdifferenztemperatur steigt. Dies kann von der Recheneinheit erfasst und als Leckage erkannt werden. Es wird dafür weder eine Drucksensor im Kältemittelkreislauf noch ein Gassensor im zu klimatisierenden Raum benötigt. Die Detektion der Leckage ist somit einfach und zuverlässig. Zudem kann mit Hilfe der Temperatursensoren auch eine sogenannte schleichende Leckage erkannt werden, d. h. eine Leckage, bei der über einen längeren Zeitraum geringe Massen- und/oder Volumenströme an Kältemittel aus dem Klimasystem austreten.

Gemäß einer Ausführungsform wird nach dem Erkennen einer Leckage eine kältemitteldichte Trennvorrichtung zur mindestens teilweisen Abtrennung des Kältemittelkreislaufs vom zu klimatisierenden Raum aktiviert.

In einer bevorzugten Ausführungsform weist das Klimasystem eine kältemitteldichte Trennvorrichtung zur mindestens teilweisen Abtrennung des Kältemittelkreislaufs vom zu klimatisierenden Raum auf. Somit kann im Leckagefall das Klimasystem und/oder der Kältemittelkreislauf vom zu klimatisierenden Raum, in dem sich Personen befinden können, abgetrennt werden. Die Personen werden somit wirksam vor dem Kältemittel geschützt. Die Trennvorrichtung kann vorzugsweise im Stillstand, d. h. wenn das Klimasystem außer Betrieb ist, geschlossen sein. Damit ist ein sicherer Betrieb des Klimasystems möglich.

Eine Gestaltungsvariante sieht vor, dass nach dem Erkennen einer Leckage der Kältemitteleingang des Kältemittelverdampfers mittels eines Kältemitteleingangsventils und der Kältemittelausgang des Kältemittelverdampfers mittels eines Kältemittelausgangsventils abgesperrt werden.

Das Kältemitteleingangsventil, mit dem der Kältemitteleingang abgesperrt werden kann, und das Kältemittelausgangsventil, mit dem der Kältemittelausgang abgesperrt werden kann, sind vorzugsweise als Magnetventile ausgebildet. Das Kältemittelausgangsventil kann alternativ ein Rückschlagventil sein, das so eingebaut ist, dass es eine Kältemittelströmung in Richtung des Kältemittelverdampfers blockiert. Dadurch kann der Kältemittelverdampfer vom übrigen Kältemittelkreislauf getrennt werden. Da der Kältemittelverdampfer sich in der Regel im zu klimatisierenden Raum befindet, wird durch das Absperren des Kältemittelverdampfers auch der zu klimatisierenden Raum vom restlichen Kältemittelkreislauf getrennt. Somit können Personen, die sich in diesem Raum aufhalten, wirksam vor dem Kältemittel geschützt werden. Durch die Ventile ist ein sehr schnelles Absperren möglich. Darüber hinaus können die Ventile ausfallsicher ("fail safe") gestaltet sein. Dabei können sie zum Beispiel in einem spannungslosen Zustand stets geschlossen sein. Damit ist ein sicherer Betrieb des Klimasystems gewährleistet.

Zudem kann nach dem Erkennen einer Leckage eine kältemitteldichte Klappe geschlossen werden, die das Klimasystem vom zu klimatisierenden Raum absperrt.

Die kältemitteldichte Klappe kann Teil der Trennvorrichtung sein. Die Klappe kann vorzugsweise vorgespannt, z. B. federbelastet, ausgeführt sein, sodass sie sich im Falle einer Leckage schnell und ohne einen externen Antrieb schließt.

Bevorzugt wird nach dem Erkennen einer Leckage eine elektronische Nachricht verschickt, die vorzugsweise Informationen über das Vorliegen einer Leckage umfasst.

Zum Verschicken der Nachricht kann das Leckageerkennungssystem eine Benachrichtigungseinheit enthalten, die mit der Recheneinheit gekoppelt ist. Die Benachrichtigungseinheit ist dazu ausgebildet, eine Nachricht über das Vorliegen einer Leckage im Kältemittelkreislauf zu erstellen. Im einfachsten Fall kann die Benachrichtigungseinheit ein Display, ein Bildschirm oder eine Kontrollleuchte, zum Beispiel eine LED, sein. Alternativ kann die Benachrichtigungseinheit auch eine elektronische Nachricht, zum Beispiel eine SMS oder E-Mail, erstellen und verschicken. Mögliche Empfänger können neben dem Betreiber des Klimasystems auch ein Servicedienstleister, ein Händler oder der Hersteller des Klimasystems sein. Somit können von der Leckage betroffene Personen einfach über eine solche informiert werden.

Vorteilhafterweise ist der Kältemittelverdampfer als Doppelrohrwärmetauscher ausgeführt (siehe deutsche Patentanmeldung DE 10 2015 122 681). Somit verfügt der Kältemittelverdampfer, der im zu klimatisierenden Raum angeordnet ist, über eine erhöhte Sicherheit gegenüber dem Austritt von Kältemittel in den zu klimatisierenden Raum. Folglich ist eine Gefährdung von Personen im zu klimatisierenden Raum bei einer Leckage im Kältemittelkreislauf zumindest reduziert.

Eine weitere Aufgabe der Erfindung ist, ein Verfahren anzugeben, mit dem eine Leckage in einem Kältemittelkreislauf eines Klimasystems der eingangs genannten Art einfach und zuverlässig erkannt werden kann. Insbesondere sollen auch kleine Leckagen erkannt werden.

Die Aufgabe wird durch ein Verfahren der eingangs genannten Art gelöst, das die folgenden Schritte umfasst:
a) Erfassen einer Raumtemperatur des zu klimatisierenden Raumes vor dem Kältemittelverdampfer an einer Lufteingangsseite,
b) Erfassen einer Kältemitteleingangstemperatur an einem Kältemitteleingang des Kältemittelverdampfers,
c) Erfassen einer Kältemittelausgangstemperatur an einem Kältemittelausgang des Kältemittelverdampfers,
d) Berechnen einer Ausgangsdifferenztemperatur als Differenz der Raumtemperatur und der Kältemittelausgangstemperatur.
e) Berechnen einer Verdampferdifferenztemperatur als Differenz der Kältemittelausgangstemperatur und der Kältemitteleingangstemperatur,
f) Erkennen einer Leckage, wenn die Ausgangsdifferenztemperatur sinkt und die Verdampferdifferenztemperatur um einen festgelegten Wert steigt.

Für die Ausgangsdifferenztemperatur und/oder die Verdampferdifferenztemperatur können je nach Anwendung des Klimasystems Grenzwerte festgelegt werden. Zum Beispiel kann ein Grenzwert eine Änderungsrate eines Temperaturwerts betreffen. Vorzugsweise ist dieser Grenzwert 2 K/min. Alternativ kann ein Grenzwert ein Temperaturwert sein.

Alternativ oder zusätzlich zum Schritt f) kann eine Leckage erkannt werden, wenn die Ausgangsdifferenztemperatur einen festgelegten Wert, z. B. 10 K, unterschreitet und/oder wenn die Verdampferdifferenztemperatur einen festgelegten Wert, z. B. 15 K, überschreitet.

Beim Erkennen einer Leckage schaltet sich das Klimasystem selbstständig ab. Dabei werden vorzugsweise auch alle steuerungstechnischen und elektrischen Komponenten des Klimasystems abgeschaltet. Bevorzugt findet zusätzlich eine schaltungstechnische Verriegelung des Klimasystems statt, sodass sich dieses von einem Anwender nicht wieder einschalten lässt.

Die Erfindung wird nachstehend anhand verschiedener Ausführungsbeispiele erläutert, die in den beigefügten Zeichnungen dargestellt sind. Es zeigen:
- Figur 1 das erfindungsgemäße Klimasystem in einer schematischen Übersicht,
- Figur 2 einen Ausschnitt einer alternativen Ausführungsform des erfindungsgemäßen Klimasystems und
- Figur 3 einen beispielhaften Verlauf von Temperaturen im erfindungsgemäßen Klimasystem.

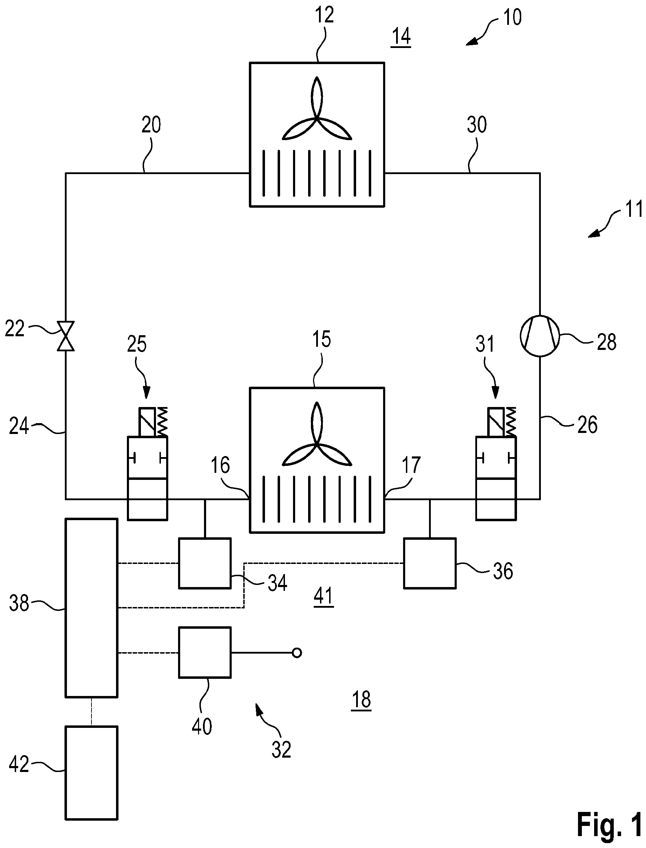

Figur 1 zeigt ein Klimasystem 10 im Überblick. Das Klimasystem 10 kann zum Beispiel in einem Freizeitfahrzeug angeordnet sein.

Dabei umfasst das Klimasystem 10 einen Kältemittelkreislauf 11 mit einem Kältemittelkondensator 12, der mit einer Umgebung 14 im Wärmeaustausch steht, und einem Kältemitteverdampfer 15 mit einem Kältemitteleingang 16 und einem Kältemittelausgang 17, der mit einem zu klimatisierenden Raum 18 im Wärmeaustausch steht.

Ein Kältemittel zirkuliert über eine Kältemittelleitung 20 vom Kältemittelkondensator 12 zu einer Kältemitteldrossel 22 und von dort aus über eine Kältemittelleitung 24 zum Kältemittelverdampfer 15. In der Kältemittelleitung 24 ist zudem ein Kältemitteleingangsventil 25 angeordnet, mit dem der Kältemitteleingang 16 wahlweise vom Rest des Kältemittelkreislaufs 11 getrennt werden kann.

Ausgehend vom Kältemittelverdampfer 15 zirkuliert das Kältemittel über eine Kältemittelleitung 26 zu einem Kältemittelkompressor 28, der über eine Kältemittelleitung 30 mit dem Kältemittelkondensator 12 verbunden ist. In der Kältemittelleitung 26 befindet sich ein Kältemittelausgangsventil 31, z. B. ein Rückschlagventil, mit dem der Kältemittelausgang 17 des Kältemittelverdampfers 15 vom Rest des Kältemittelkreislaufs getrennt werden kann.

Für den Fall, dass sowohl das Kältemitteleingangsventil 25 als auch das Kältemittelausgangsventil 31 geschlossen sind, ist der Kältemittelverdampfer 15 vom übrigen Kältemittelkreislauf 11 abgesperrt.

Das Klimasystem 10 umfasst darüber hinaus ein Leckageerkennungssystem 32, das über einen Eingangstemperatursensor 34 verfügt, der eine Eingangstemperatur TE des Kältemittels am Kältemitteleingang 16 des Kältemittelverdampfers 15 erfassen kann. Zusätzlich umfasst das Leckageerkennungssystem 32 einen Ausgangstemperatursensor 36, der eine Ausgangstemperatur TA des Kältemittels am Kältemittelausgang 17 des Kältemittelverdampfers 15 erfassen kann.

Sowohl der Eingangstemperatursensor 34 als auch der Ausgangstemperatursensor 36 sind mit einer Recheneinheit 38 gekoppelt.

Zusätzlich umfasst das Leckageerkennungssystem 32 einen Raumtemperatursensor 40, der eine Raumtemperatur TR des zu klimatisierenden Raums 18 vor dem Kältemittelverdampfer 15 an einer Lufteingangsseite 41 erfassen kann. Der Raumtemperatursensor 40 ist auch mit der Recheneinheit 38 gekoppelt.

An die Recheneinheit 38 ist darüber hinaus eine Benachrichtigungseinheit 42 angeschlossen.

Alternativ kann eine kombinierte Rechen- und Benachrichtigungseinheit vorgesehen sein.

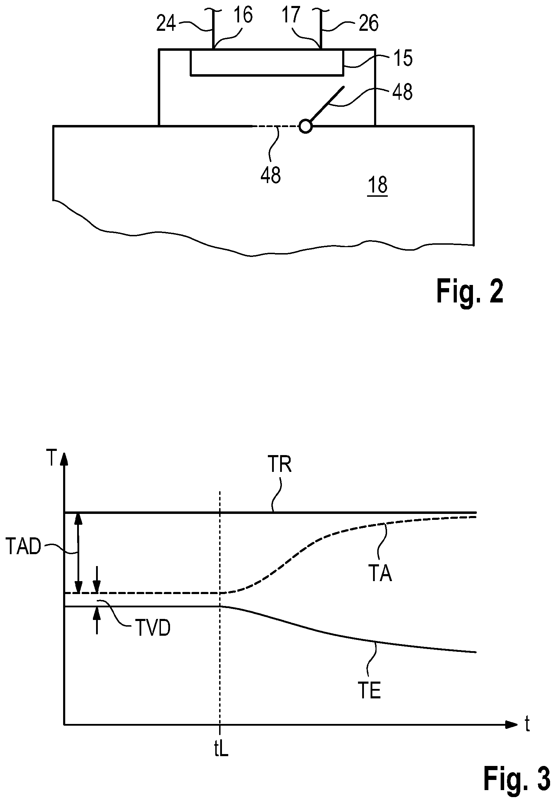

Eine alternative Ausführungsform zum Absperren des Kältemittelverdampfers 15 vom übrigen Kältemittelkreislauf 11 ist in Figur 2 zu sehen. Hier ist der Kältemittelverdampfer 15 schematisch dargestellt und der Rest des Kältemittelkreislaufs 11 abgeschnitten. Auch der zu klimatisierende Raum 18 ist lediglich abgebrochen dargestellt.

Zum Absperren des Kältemittelkreislaufs 11 und/oder des Kältemittelverdampfers 15 vom zu klimatisierenden Raum 18 ist bei der Ausführungsform nach Figur 2 eine kältemitteldichte Klappe 48 vorgesehen, die in ihrer geschlossenen Stellung (gestrichelt dargestellt) das Klimasystem 10 vom zu klimatisierenden Raum 18 absperren kann.

Die Klappe 48 kann beispielsweise in ihre geschlossene Stellung vorgespannt sein.

Die Klappe 48 kann alternativ als Schieber ausgeführt sein.

Die Funktionsweise des Klimasystems 10 wird nun anhand des in Figur 3 dargestellten Diagramms erläutert. In diesem Diagramm sind auf der x-Achse Zeiten t und auf der y-Achse Temperaturen T aufgetragen.

Eine erste Kurve beschreibt den Verlauf der Raumtemperatur TR des zu klimatisierenden Raums 18 vor dem Kältemittelverdampfer 15 an der Lufteingangsseite 41. Eine zweite Kurve stellt den Verlauf der Kältemitteleingangstemperatur TE des Kältemittels am Kältemitteleingang 16 des Kältemittelverdampfers 15 dar. Eine dritte Kurve verdeutlicht den Verlauf der Kältemittelausgangstemperatur TA am Kältemittelausgang 17 des Kältemittelverdampfers 15.

Im Betrieb des Klimasystems 10 erfasst der Eingangstemperatursensor 34 die Kältemitteleingangstemperatur TE und kommuniziert diese an die Recheneinheit 38. Der Ausgangstemperatursensor 36 erfasst die Kältemittelausgangstemperatur TA und leitet den gemessenen Temperaturwert an die Recheneinheit 38 weiter.

In gleicher Weise erfasst der Raumtemperatursensor 40 die Raumtemperatur TR des zu klimatisierenden Raums 18 vor dem Kältemittelverdampfer 15 an der Lufteingangsseite 41 und übermittelt diese Temperatur an die Recheneinheit 38.

Die Recheneinheit 38 berechnet aufgrund der ihr übermittelten Temperaturwerte eine Ausgangsdifferenztemperatur TAD als Differenz der Raumtemperatur TR und der Kältemittelausgangstemperatur TA und eine Verdampferdifferenztemperatur TVD als Differenz der Kältemittelausgangstemperatur TA und der Kältemitteleingangstemperatur TE.

Für den Fall, dass im Klimasystem 10 keine Leckage vorliegt, verlaufen die Temperaturen TR, TA, und TE beim stationären Betrieb des Klimasystems 10 im Wesentlichen konstant. Dementsprechend sind auch die Verdampferdifferenztemperatur TVD und die Ausgangsdifferenztemperatur TAD im Wesentlichen konstant. Das Kältemittel zirkuliert dabei durch den Kältemittelkreislauf 11, wobei die Menge an Kältemittel im Wesentlichen konstant bleibt.

Es wird nun angenommen, dass zum Zeitpunkt tL eine Leckage in der Kältemittelleitung 20 auftritt. Beispielsweise könnte die Leckage durch einen Riss in der Kältemittelleitung 20 verursacht werden.

Wie im weiteren Verlauf der Beschreibung zu sehen ist, ist es dabei unerheblich, an welcher Stelle im Kältemittelkreislauf 11 die Leckage auftritt.

Aufgrund der Leckage geht eine gewisse Menge an Kältemittel aus dem Kältemittelkreislauf 11 verloren.

Die durch das Gebläse am Kältemittelverdampfer 15 dem Kältemittelkreislauf 11 zugeführte Wärmemenge bleibt jedoch im Wesentlichen gleich. Auch wird am Kältemittelkondensator 12 dem Kältemittel über ein Gebläse eine im Wesentlichen gleichbleibende Wärmemenge entzogen.

Die Temperatur TR des zu klimatisierenden Raumes 18 bleibt ebenso im Wesentlichen unverändert.

In der Folge sinkt die Eingangstemperatur TE, da einer kleiner werdenden Menge an Kältemittel am Kältemittelkondensator 12 eine gleichbleibende Wärmemenge entzogen wird. Die Ausgangstemperatur TA steigt, da in eine verringerte Menge an Kältemittel am Kältemittelverdampfer 15 eine gleichbleibende Wärmemenge eingebracht wird.

In der Folge sinkt die Ausgangsdifferenztemperatur TAD, und die Verdampferdifferenztemperatur TVD steigt.

Darüber hinaus sinkt der Druck im Kältemittelkreislauf 11.

Die Recheneinheit 38 vergleicht die Änderung der Verdampferdifferenztemperatur TVD mit einem festgelegten Wert, der in der Recheneinheit 38 abgespeichert ist. Dieser Grenzwert kann beispielsweise 2 K/min. betragen.

Falls nun die Ausgansdifferenztemperatur TAD um mehr als 2 K/min. sinkt und die Verdampferdifferenztemperatur TVD um mehr als 2 K/min. steigt, erkennt die Recheneinheit 38 eine Leckage.

Die Grenzwerte für TAD und TVD sind dabei in Abhängigkeit der konkreten Anwendung festzulegen und können auch unterschiedlich sein.

Falls die Ausgangsdifferenztemperatur TAD einen festen Wert, z. B. 10 K, unterschreitet und/oder die Verdampferdifferenztemperatur TVD einen festen Wert, z. B. 15 K, überschreitet, erkennt die Recheneinheit ebenfalls eine Leckage.

Als Reaktion auf das Erkennen der Leckage kann die Recheneinheit 38 zunächst über die Benachrichtigungseinheit 42 eine Nachricht erstellen. Zum Beispiel kann die Benachrichtigungseinheit eine SMS oder E-Mail an einen Reparaturservice für Klimasysteme versenden.

Zusätzlich wird die Recheneinheit 38 Maßnahmen zum Schutz der im zu klimatisierenden Raum 18 befindlichen Personen einleiten. Dafür werden in der ersten Ausführungsform, die in Figur 1 dargestellt ist, das Kältemitteleingangsventil 25 und das Kältemittelausgangsventil 31 geschlossen. Somit ist der Kältemittelverdampfer 15 vom übrigen Kältemittelkreislauf 11 abgesperrt.

Alternativ kann die Recheneinheit 38 in der in Figur 2 dargestellten Ausführungsform die Klappe 48 von einer Offenposition (durchgezogene Linie) in eine geschlossene Position (gestrichelte Linie) verlagern.

In beiden Alternativen ist dann der zu klimatisierenden Raum 18 vom Klimasystem 10, insbesondere vom Kältemittelkreislauf 11, abgesperrt. Damit werden Personen, die sich im zu klimatisierenden Raum 18 aufhalten, nur einer sehr geringen Menge an ausgetretenem Kältemittel oder gar keinem Kältemittel ausgesetzt.

## Patentansprüche

1. Klimasystem (10), insbesondere für ein Freizeitfahrzeug, mit einem Kältemittelkreislauf (11),
wobei das Klimasystem (10) in Zirkulationsrichtung eines Kältemittels gesehen einen Kältemittelkondensator (12), der mit einer Umgebung (14) im Wärmeaustausch stehen kann, eine Kältemitteldrossel (22), einen Kältemittelverdampfer (15), der mit einem zu klimatisierenden Raum (18) im Wärmeaustausch stehen kann, und einen Kältemittelkompressor (28) umfasst,
wobei das Klimasystem (10) ein Leckageerkennungssystem (32) aufweist mit einem Raumtemperatursensor (40), der dazu ausgebildet ist, eine Raumtemperatur (TR) des zu klimatisierenden Raumes (18) vor dem Kältemittelverdampfer (15) an einer Lufteingangsseite (41) zu erfassen, einem Eingangstemperatursensor (34), der dazu ausgebildet ist, eine Kältemitteltemperatur an einem Kältemitteleingang (16) des Kältemittelverdampfers (15) zu erfassen, einem Ausgangstemperatursensor (36), der dazu ausgebildet ist, eine Kältemitteltemperatur an einem Kältemittelausgang (17) des Kältemittelverdampfers (15) zu erfassen, und einer Recheneinheit (38), die mit dem Raumtemperatursensor (40), dem Eingangstemperatursensor (34) und dem Ausgangstemperatursensor (36) gekoppelt ist,
**dadurch gekennzeichnet, dass** die Recheneinheit dazu ausgebildet ist,
eine Ausgangsdifferenztemperatur als Differenz der Raumtemperatur und der Kältemitteltemperatur am Kältemittelausgang und eine Verdampferdifferenztemperatur als Differenz der Kältemitteltemperatur am Kältemitteleingang und am Kältemittelausgang zu berechnen und
eine sinkende Ausgangsdifferenztemperatur und eine steigende Verdampferdifferenztemperatur zu erfassen sowie
anhand der sinkenden Ausgangsdifferenztemperatur und der steigenden Verdampferdifferenztemperatur eine Leckage zu erkennen.

2. Klimasystem (10) nach Anspruch 1, **dadurch gekennzeichnet, dass** es eine kältemitteldichte Trennvorrichtung zur mindestens teilweisen Abtrennung des Kältemittelkreislaufs (11) vom zu klimatisierenden Raum (18) aufweist.

3. Klimasystem (10) nach Anspruch 2, **dadurch gekennzeichnet, dass** die Trennvorrichtung ein Kältemitteleingangsventil (25), das dazu ausgebildet ist, den Kältemitteleingang (16) wahlweise abzusperren, und ein Kältemittelausgangsventil (31) umfasst, das dazu ausgebildet ist, den Kältemittelausgang (17) wahlweise abzusperren, wobei das Kältemitteleingangsventil (25) und das Kältemittelausgangsventil (31) vorzugsweise als Magnetventile ausgebildet sind.

4. Klimasystem (10) nach einem der Ansprüche 2 oder 3, **dadurch gekennzeichnet, dass** die Trennvorrichtung eine kältemitteldichte Klappe (48) umfasst, die dazu ausgebildet ist, das Klimasystem (10) vom zu klimatisierenden Raum (18) abzusperren.

5. Klimasystem (10) nach einem der vorhergehenden Ansprüche, **dadurch gekennzeichnet, dass** das Leckageerkennungssystem (32) eine Benachrichtigungseinheit (42) umfasst, die mit der Recheneinheit (38) gekoppelt ist.

6. Klimasystem (10) nach einem der vorhergehenden Ansprüche, **dadurch gekennzeichnet, dass** der Kältemittelverdampfer (15) als Doppelrohrwärmetauscher ausgeführt ist.

7. Verfahren zur Leckageerkennung in einem Klimasystem (10), insbesondere für ein Freizeitfahrzeug, mit einem Kältemittelkreislauf (11), wobei das Klimasystem (10) in Zirkulationsrichtung des Kältemittels gesehen einen Kältemittelkondensator (12), der mit einer Umgebung (14) im Wärmeaustausch stehen kann, eine Kältemitteldrossel (22), einen Kältemittelverdampfer (15), der mit einem zu klimatisierenden Raum (18) im Wärmeaustausch stehen kann, und einen Kältemittelkompressor (28) umfasst, mit den folgenden Schritten:
a) Erfassen einer Raumtemperatur (TR) des zu klimatisierenden Raumes (18) vor dem Kältemittelverdampfer (15) an einer Lufteingangsseite (41),
b) Erfassen einer Kältemitteleingangstemperatur (TE) an einem Kältemitteleingang (16) des Kältemittelverdampfers (15),
c) Erfassen einer Kältemittelausgangstemperatur (TA) an einem Kältemittelausgang (17) des Kältemittelverdampfers (15),
d) Berechnen einer Ausgangsdifferenztemperatur (TAD) als Differenz der Raumtemperatur (TR) und der Kältemittelausgangstemperatur (TA).
e) Berechnen einer Verdampferdifferenztemperatur (TVD) als Differenz der Kältemittelausgangstemperatur (TA) und der Kältemitteleingangstemperatur (TE),
f) Erkennen einer Leckage, wenn die Ausgangsdifferenztemperatur (TAD) sinkt und die Verdampferdifferenztemperatur (TVD) um einen festgelegten Wert steigt.

8. Verfahren nach Anspruch 7, **dadurch gekennzeichnet, dass** nach dem Erkennen einer Leckage eine kältemitteldichte Trennvorrichtung zur mindestens teilweisen Abtrennung des Kältemittelkreislaufs (11) vom zu klimatisierenden Raum (18) aktiviert wird.

9. Verfahren nach Anspruch 8, **dadurch gekennzeichnet, dass** nach dem Erkennen einer Leckage der Kältemitteleingang (16) des Kältemittelverdampfers (15) mittels eines Kältemitteleingangsventils (25) und der Kältemittelausgang (17) des Kältemittelverdampfers (15) mittels eines Kältemittelausgangsventils (31) abgesperrt werden.

10. Verfahren nach Anspruch 8 oder 9, **dadurch gekennzeichnet, dass** nach dem Erkennen einer Leckage eine kältemitteldichte Klappe (48) geschlossen wird, die das Klimasystem (10) vom zu klimatisierenden Raum (18) absperrt.

11. Verfahren nach einem der Ansprüche 7 bis 10, **dadurch gekennzeichnet, dass** nach dem Erkennen einer Leckage eine elektronische Nachricht verschickt wird, die vorzugsweise Informationen über das Vorliegen einer Leckage umfasst.

## Claims

1. An air conditioning system (10), in particular for a recreational vehicle, comprising a refrigerant circuit (11),
wherein, as seen in a circulation direction of a refrigerant, the air conditioning system (10) comprises a refrigerant condenser (12) which can be in heat exchange with an environment (14), a refrigerant throttle (22), a refrigerant evaporator (15) which can be in heat exchange with a room (18) to be air-conditioned, and a refrigerant compressor (28),
wherein the air conditioning system (10) includes a leakage detection system (32) having a room temperature sensor (40) which is configured to detect a room temperature (TR) of the room (18) to be air-conditioned, upstream of the refrigerant evaporator (15) on an air inlet side (41), an inlet temperature sensor (34) which is configured to detect a refrigerant temperature at a refrigerant inlet (16) of the refrigerant evaporator (15), an outlet temperature sensor (36) which is configured to detect a refrigerant temperature at a refrigerant outlet (17) of the refrigerant evaporator (15), and a calculating unit (38) which is coupled to the room temperature sensor (40), the inlet temperature sensor (34) and the outlet temperature sensor (36),
**characterized in that** the calculating unit is configured to
calculate an outlet differential temperature as a difference of the room temperature and the refrigerant temperature at the refrigerant outlet and an evaporator differential temperature as a difference of the refrigerant temperature at the refrigerant inlet and at the refrigerant outlet, and
detect a decreasing outlet differential temperature and an increasing evaporator differential temperature, and
detect a leakage based on the decreasing outlet differential temperature and the increasing evaporator differential temperature.

2. The air conditioning system (10) according to claim 1, **characterized in that** it includes a refrigerant-tight separating device for at least partly separating the refrigerant circuit (11) from the room (18) to be air-conditioned.

3. The air conditioning system (10) according to claim 2, **characterized in that** the separating device comprises a refrigerant inlet valve (25) which is configured to selectively shut off the refrigerant inlet (16), and a refrigerant outlet valve (31) which is configured to selectively shut off the refrigerant outlet (17), wherein the refrigerant inlet valve (25) and the refrigerant outlet valve (31) are preferably formed as solenoid valves.

4. The air conditioning system (10) according to either of claims 2 or 3, **characterized in that** the separating device comprises a refrigerant-tight flap (48) which is configured to shut off the air conditioning system (10) from the room (18) to be air-conditioned.

5. The air conditioning system (10) according to any of the preceding claims, **characterized in that** the leakage detection system (32) comprises a notifying unit (42) which is coupled to the calculating unit (38).

6. The air conditioning system (10) according to any of the preceding claims, **characterized in that** the refrigerant evaporator (15) is designed as a double-pipe heat exchanger.

7. A method for leakage detection in an air conditioning system (10), in particular for a recreational vehicle, comprising a refrigerant circuit (11), wherein, as seen in a circulation direction of the refrigerant, the air conditioning system (10) comprises a refrigerant condenser (12) which can be in heat exchange with an environment (14), a refrigerant throttle (22), a refrigerant evaporator (15) which can be in heat exchange with a room (18) to be air-conditioned, and a refrigerant compressor (28), comprising the following steps:
a) detecting a room temperature (TR) of the room (18) to be air-conditioned, upstream of the refrigerant evaporator (15) on an air inlet side (41),
b) detecting a refrigerant inlet temperature (TE) at a refrigerant inlet (16) of the refrigerant evaporator (15),
c) detecting a refrigerant outlet temperature (TA) at a refrigerant outlet (17) of the refrigerant evaporator (15),
d) calculating an outlet differential temperature (TAD) as a difference of the room temperature (TR) and the refrigerant outlet temperature (TA),
e) calculating an evaporator differential temperature (TVD) as a difference of the refrigerant outlet temperature (TA) and the refrigerant inlet temperature (TE),
f) detecting a leakage when the outlet differential temperature (TAD) decreases and the evaporator differential temperature (TVD) increases by a fixed value.

8. The method according to claim 7, **characterized in that** after detection of a leakage, a refrigerant-tight separating device is activated for at least partly separating the refrigerant circuit (11) from the room (18) to be air-conditioned.

9. The method according to claim 8, **characterized in that** after detection of a leakage, the refrigerant inlet (16) of the refrigerant evaporator (15) is shut off by means of a refrigerant inlet valve (25), and the refrigerant outlet (17) of the refrigerant evaporator (15) is shut off by means of a refrigerant outlet valve (31).

10. The method according to claim 8 or 9, **characterized in that** after detection of a leakage, a refrigerant-tight flap (48) is closed which shuts off the air conditioning system (10) from the room (18) to be air-conditioned.

11. The method according to any of claims 7 to 10, **characterized in that** after detection of a leakage, an electronic message is sent which preferably comprises information on the presence of a leakage.

## Revendications

1. Système de climatisation (10), en particulier pour un véhicule de loisirs, comportant un circuit de réfrigérant (11),
le système de climatisation (10), vu dans le sens de circulation d'un réfrigérant, comprenant un condenseur de réfrigérant (12) qui peut être en échange thermique avec un environnement (14), un étranglement de réfrigérant (22), un évaporateur de réfrigérant (15) qui peut être en échange thermique avec un espace (18) à climatiser, et un compresseur de réfrigérant (28),
le système de climatisation (10) comportant un système de détection de fuite (32) qui présente un capteur de température ambiante (40) qui est réalisé de manière à saisir une température ambiante (TR) de l'espace (18) à climatiser en amont de l'évaporateur de réfrigérant (15), d'un côté d'entrée d'air (41), un capteur de température d'entrée (34) qui est réalisé de manière à saisir une température de réfrigérant à une entrée de réfrigérant (16) de l'évaporateur de réfrigérant (15), un capteur de température de sortie (36) qui est réalisé de manière à saisir une température de réfrigérant à une sortie de réfrigérant (17) de l'évaporateur de réfrigérant (15), et une unité de calcul (38) qui est couplée au capteur de température ambiante (40), au capteur de température d'entrée (34) et au capteur de température de sortie (36),
**caractérisé en ce que** l'unité de calcul est réalisée de manière
à calculer une température différentielle de sortie en tant que différence de la température ambiante et de la température de réfrigérant à la sortie de réfrigérant, et une température différentielle d'évaporateur en tant que différence de la température de réfrigérant à l'entrée de réfrigérant et à la sortie de réfrigérant, et
à saisir une température différentielle de sortie en baisse et une température différentielle d'évaporateur en hausse, et
à détecter une fuite sur la base de la température différentielle de sortie en baisse et la température différentielle d'évaporateur en hausse.

2. Système de climatisation (10) selon la revendication 1, **caractérisé en ce qu'**il présente un dispositif de séparation étanche au réfrigérant pour la séparation au moins partielle du circuit de réfrigérant (11) de l'espace (18) à climatiser.

3. Système de climatisation (10) selon la revendication 2, **caractérisé en ce que** le dispositif de séparation comprend une vanne d'entrée de réfrigérant (25) qui est réalisée de manière à sélectivement obturer l'entrée de réfrigérant (16), et une vanne de sortie de réfrigérant (31) qui est réalisée de manière à sélectivement obturer la sortie de réfrigérant (17), la vanne d'entrée de réfrigérant (25) et la vanne de sortie de réfrigérant (31) étant de préférence réalisées sous forme d'électrovannes.

4. Système de climatisation (10) selon l'une des revendications 2 ou 3, **caractérisé en ce que** le dispositif de séparation comprend un volet (48) étanche au réfrigérant, lequel est réalisé de manière à obturer le système de climatisation (10) par rapport à l'espace (18) à climatiser.

5. Système de climatisation (10) selon l'une des revendications précédentes, **caractérisé en ce que** le système de détection de fuite (32) comprend une unité de notification (42) qui est couplée à l'unité de calcul (38).

6. Système de climatisation (10) selon l'une des revendications précédentes, **caractérisé en ce que** l'évaporateur de réfrigérant (15) est réalisé sous forme d'échangeur thermique à deux tubes.

7. Procédé de détection de fuite dans un système de climatisation (10), en particulier pour un véhicule de loisirs, comportant un circuit de réfrigérant (11), le système de climatisation (10), vu dans le sens de circulation du réfrigérant, comprenant un condenseur de réfrigérant (12) qui peut être en échange thermique avec un environnement (14), un étranglement de réfrigérant (22), un évaporateur de réfrigérant (15) qui peut être en échange thermique avec un espace (18) à climatiser, et un compresseur de réfrigérant (28), le procédé comprenant les étapes suivantes :
a) saisie d'une température ambiante (TR) de l'espace (18) à climatiser en amont de l'évaporateur de réfrigérant (15), d'un côté d'entrée d'air (41),
b) saisie d'une température d'entrée de réfrigérant (TE) à une entrée de réfrigérant (16) de l'évaporateur de réfrigérant (15),
c) saisie d'une température de sortie de réfrigérant (TA) à une sortie de réfrigérant (17) de l'évaporateur de réfrigérant (15),
d) calcul d'une température différentielle de sortie (TAD) en tant que différence de la température ambiante (TR) et de la température de sortie de réfrigérant (TA),
e) calcul d'une température différentielle d'évaporateur (TVD) en tant que différence de la température de sortie de réfrigérant (TA) et de la température d'entrée de réfrigérant (TE),
f) détection d'une fuite lorsque la température différentielle de sortie (TAD) baisse et la température différentielle d'évaporateur (TVD) augmente d'une valeur déterminée.

8. Procédé selon la revendication 7, **caractérisé en ce qu'**un dispositif de séparation étanche au réfrigérant pour la séparation au moins partielle du circuit de réfrigérant (11) de l'espace (18) à climatiser est activé après la détection d'une fuite.

9. Procédé selon la revendication 8, **caractérisé en ce que** l'entrée de réfrigérant (16) de l'évaporateur de réfrigérant (15) est obturée au moyen d'une vanne d'entrée de réfrigérant (25), et la sortie de réfrigérant (17) de l'évaporateur de réfrigérant (15) est obturée au moyen d'une vanne de sortie de réfrigérant (31) après la détection d'une fuite.

10. Procédé selon la revendication 8 ou 9, **caractérisé en ce qu'**un volet (48) étanche au réfrigérant obturant le système de climatisation (10) par rapport à l'espace (18) à climatiser est fermé après la détection d'une fuite.

11. Procédé selon l'une des revendications 7 à 10, **caractérisé en ce qu'**un message électronique comprenant de préférence des informations concernant la présence d'une fuite est envoyé après la détection d'une fuite.
